**Europäisches Patentamt**

**European Patent Office**

**Office européen des brevets**

(19)

(11) Publication number : **0 393 185 B1**

# EUROPEAN PATENT SPECIFICATION

(12)

(45) Date of publication of patent specification :
23.08.95 Bulletin 95/34

(51) Int. Cl.⁶ : **G01N 30/60, B01D 15/08**

(21) Application number : **88904664.5**

(22) Date of filing : **03.06.88**

(86) International application number :
**PCT/JP88/00539**

(87) International publication number :
**WO 89/12229 14.12.89 Gazette 89/29**

(54) **SYRINGE TYPE COLUMN FOR CHROMATOGRAPHY.**

(43) Date of publication of application :
24.10.90 Bulletin 90/43

(45) Publication of the grant of the patent :
23.08.95 Bulletin 95/34

(84) Designated Contracting States :
**DE GB**

(56) References cited :
**JP-A-57 158 553**
**JP-A-63 304 161**
**US-A- 4 341 635**

(73) Proprietor : **MANAC INCORPORATED**
**10-1, Nishimachi 2-chome**
**Fukuyama-shi, Hiroshima 720 (JP)**

(72) Inventor : **KIMURA, Masaru**
**37-10, Ezucho 9-chome**
**Okayama-shi Okayama 700 (JP)**
Inventor : **KOCHI, Hiromi**
**Mana Inc.**
**92, Minookicho**
**Fukuyama-shi Hiroshima 721 (JP)**

(74) Representative : **May, Hans Ulrich, Dr.**
**Patentanwalt Dr.H.U.May,**
**Thierschstrasse 27**
**D-80538 München (DE)**

## Description

[Technical Field]

This invention relates to a syringe type column to be used for chromatography, more particularly to a syringe type column having a novel structure, in which an uniformity in a stationary phase filled in a column may not be disturbed even after repeating operations of introducing a solvent for development thereto, so that the stationary phase filled in the column may not be disorganized even after performing operations where high separating efficiency is required.

[Background Art]

With recently required precision of chemical reactions, development of simple and convenient methods for purifying or separating a trace of reaction product is becoming desideratum. As one of such methods, there has been contemplated a pressurized chromatography applied with a medium pressure in which a syringe is used as a column. In this method, a barrel of the syringe having a discharge port at the tip is first filled with a silica gel granule, an alumina granule or a cellulose fiber, to which a predetermined amount of a solution containing the reaction product to be separated is then introduced and further a predetermined amount of a solvent for development. Subsequently, a plunger is inserted in the barrel to be pressed thereinto gradually to effect development and separation of a desired material, which is sampled from the discharge port of the barrel.

When high separating efficiency is tried to be obtained in this method, the following inconvenience occurs.

For the purification or separation of the reaction product, it is generally necessary to introduce the solvent for development repeatedly to the stationary phase while uniformly maintaining it in the filled state. However, in the above method, the plunger must be drawn out of the barrel every time the solvent for development is introduced into the barrel. When the plunger is drawn out of the barrel, an inner space of the barrel inevitably suffers a negative pressure, so that the air flows into the barrel through the discharge port at the tip thereof, and the filled state of the stationary phase is subject to turbulence due to the movement of the air flowing into the barrel to break down an equilibrium state formed therein.

It is an object of this invention to provide a syringe type column having a structure in which the solvent for development can repeatedly be introduced into the column while the equilibrium state formed in the stationary phase is maintained and without causing the inconvenience as described above in said repeated introduction of the solvent for development.

(Disclosure of the invention)

The object of this invention is achieved by a syringe type column for use in chromatography having the features defined in claim 1. Advantageous embodiments of the invention are defined in the dependend claims and method claims.

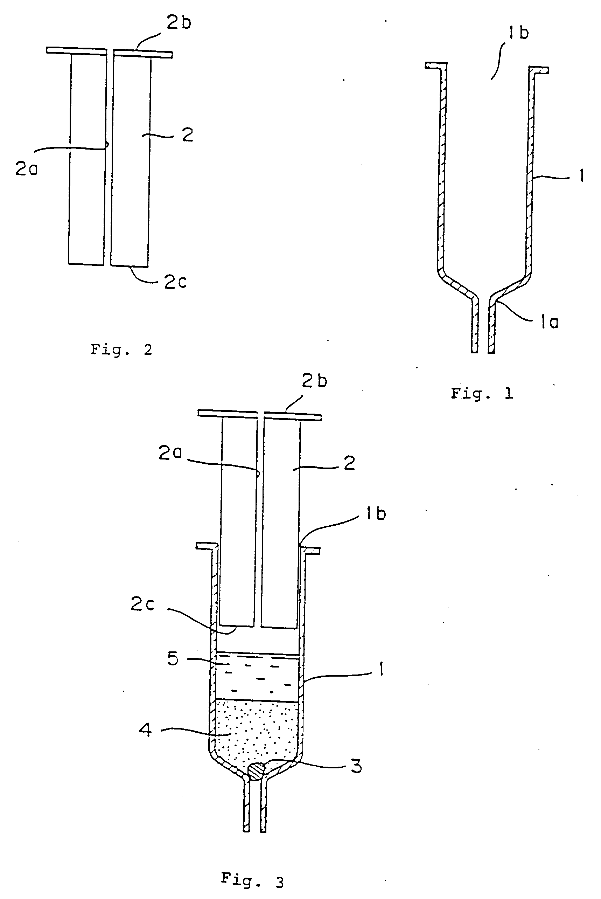

The column of this invention will be described in more detail referring to the drawings. Fig. 1 and Fig. 2 show, in longitudinal cross-section, the cylindrical barrel and the plunger, respectively, which constitute the column when they are combined with each other.

The cylindrical barrel has, on the whole, for example, a cylindrical shape, wherein the solution discharge port la is provided at a bottom end and an upper end is defined as the open end 1b. On the other hand, the plunger 2 has at least one air vent 2a formed to pierce therethrough along the axis from an upper surface 2b to a lower surface 2c.

The column of this invention is handled as follows: As shown in Fig. 3, the outlet of the solution discharge port 1a of the cylindrical barrel 1 is sealed with a liquid-permeable member 3 such as cotton. Next, a predetermined amount of a stationary phase is filled into the barrel 1. As the stationary phase, a suitable one may be selected depending on a purpose from those used for ordinary column chromatography and HPLC. Subsequently, a predetermined amount of sample solution is introduced from the open end 1b and then a predetermined amount of a solvent for development 5 is further introduced.

The plunger 2 is then inserted in the open end 1b to be pressed into the barrel 1 with a finger of an operator being applied to the upper surface 2b thereof.

As the plunger 2 is pressed into the barrel 1, the solvent for development 5 permeates through the stationary phase 4, whereby a desired material can gradually be eluted. When the lower surface 2c of the plunger 2 substantially comes to be abutted against an upper surface of the stationary phase 4 after consumption of the solvent for development 5, the finger applied to the upper surface 2b of the plunger 2 is released to draw out the plunger 2.

In the above process, air flows into the barrel 1 through the air vent 2a, so that an inner space of the barrel 1 will never suffer negative pressure. Moreover, since the air flows in not through the solution discharge port la but through the air vent 2a of the plunger 2, the stationary phase 4 will never be subject to turbulence due to the movement of the in-flowing air.

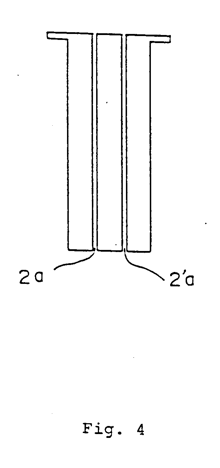

Fig. 4 shows another embodiment of the plunger, in which two air vents are formed to pierce therethrough. In the plunger of this embodiment, the solvent for development can be introduced into the barrel through the other air vent 2'a without drawing out the plunger 2 therefrom.

Incidentally, these cylindrical barrels and plungers may be made of glass or a resin such as polyethylene.

[Brief Description of Drawings]

Fig. 1 and Fig. 2 show, in longitudinal cross-section, the cylindrical barrel which is one member constituting the column of this invention and the plunger which is the other member constituting the column of this invention, respectively. Fig. 3 is an illustration for explaining the way how the column of this invention is used. Fig. 4 shows another embodiment of the plunger which is one of the members constituting the column of this invention.

```
1  ... cylindrical barrel    1a ... solution discharge port

1b ... open end              2  ... plunger

2a, 2'a ... air vent         2b ... upper surface

2c ... lower surface         3  ... sealing member

4  ... stationary phase      5  ... solvent for development
```

[Industrial Applicability]

As apparent from the above description, the column of this invention has very high practical value, since the solvent for development can be introduced thereinto repeatedly without breaking down the equilibrium state formed in the stationary phase to obtain high efficiency of separating the desired substances.

**Claims**

1. A syringe type column for use in chromatography for separation of a reaction product, comprising:
   - a cylindrical barrel (1) having a solution discharge port (1a) at the bottom end thereof and an opening (1b) at the upper end thereof and a stationary phase (4) suitable for ordinary column chromatography or HPLC uniformly filled in said barrel, said barrel being able to be occupied by said stationary phase, a solution containing a trace substance to be purified or separated therefrom, and a solvent for development therein;
   - a liquid permeable member (3) closing said solution discharge port to the passage of the stationary phase;
   - a plunger (2) which is repeatedly insertable into and repeatedly removable from said cylindrical barrel through said opening (lb) at said upper end of said cylindrical barrel, characterized in that said plunger (2) has at least one air vent (2a, 2'a) formed therein and piercing there-through along an axis, said at least one air vent (2a, 2'a) communicating the interior of said cylindrical barrel (1) with the outside for allowing air to flow into the interior of said cylindrical barrel (1) therethrough when said plunger (2) is drawn out from said barrel (1), so that an inner space of said barrel (1) will never suffer negative pressure and said stationary phase will not be subjected to turbulence, because the inflowing air does not flow through said solution discharge port (1a).

2. The syringe type column of claim 1, wherein said plunger (2) has at least one air vent (2a, 2'a) formed to pierce therethrough along the axis from an upper surface (2b) to a lower surface (2c) of said plunger.

3. The syringe type column of claim 2, wherein two air vents (2a, 2'a) are formed to pierce through said plunger (2).

4. A method of using a syringe type column for liquid chromatography, said column comprising a cylindrical barrel (1) having a solution discharge port (la) at the bottom end thereof and an opening (lb) at the upper end thereof, and further comprising a plunger (2), said method comprising the following steps:

(a) closing said solution discharge port (la) with a liquid permeable member (3);

(b) filling a predetermined amount of the stationary phase (4) suitable for ordinary column chromatography or HPLC uniformly into said barrel (1);

c) introducing a predetermined amount of a sample solution in said barrel (1) from the open end (lb) thereof;

d) introducing a predetermined amount of a solvent for development (5) into said barrel (1);

e) inserting said plunger (2) into said opening (1b) of said barrel (1) and

f) pressing said plunger (2) into the interior of said barrel (1) to cause said solvent for development to permeate through said stationary phase;

characterized in that said plunger (2) being formed with at least one air vent (2a, 2'a) piercing therethrough along the axis from an upper surface (2b) to a lower surface (2c) of said plunger (2), said pressing of said plunger (2) into the interior of said barrel (1) is effected by pressing with a finger of an operator to said upper surface (2b) of said plunger, so as to cause said solvent for development to permeate through said stationary phase and

g) after consumption of the solvent releasing said finger from said upper surface (2b) and withdrawing said plunger (2) from said barrel (1) while air flows into said barrel (1) from the outside, not through said solution discharge port (1a), but through said at least one air vent (2a, 2'a) to prevent negative pressure in said barrel (1), whereby said stationary phase (4) is never subjected to turbulence due to the movement of the inflowing air and

h) introducing further solvent for development into the barrel without breaking down the equilibrium state formed in the stationary phase.

5. The method of claim 4, wherein said plunger has two air vents (2a, 2'a) extending therethrough from the upper end surface (2b) to the lower end surface (2c) thereof and wherein the solvent for development is introduced into the barrel through one air vent (2'a) of the two air vents (2a, 2'a) without drawing said plunger (2) out from said barrel (1).

**Patentansprüche**

1. Chromatographiesäule vom Spritzentyp zur Verwendung bei der chromatographischen Trennung eines Reaktionsprodukts, mit:

- einem Spritzenzylinder (1) mit einer Lösungsablauföffnung (1a) an seinem Bodenende und einer Öffnung (1b) an seinem oberen Ende und einer für gewöhnliche Säulenchromatographie oder Hochdruckflüssigkeitschromatographie (HPLC) geeigneten stationären Phase (4), die gleichmäßig in den Zylinder eingefüllt ist, wobei der Zylinder von der stationären Phase eingenommen werden kann, mit einer Lösung, die eine zu reinigende oder davon abzutrennende Spurensubstanz enthält, und einem Lösungsmittel zum Entwickeln;

- einem flüssigkeitsdurchlässigen Teil (3), der die Lösungsablauföffnung für den Durchtritt der stationären Phase verschließt;

- einem Kolben (2), der in den Spritzenzylinder durch die Öffnung (1b) am oberen Ende des Spritzenzylinders wiederholt einführbar und daraus entfernbar ist, **dadurch gekennzeichnet, daß** der Kolben (2) wenigstens einen darin ausgebildeten und ihn längs einer Achse durchsetzenden Luftkanal (2a, 2'a) hat, wobei der besagte wenigstens eine Luftkanal (2a, 2'a) den Innenraum des Spritzenzylinders (1) mit der Umgebung verbindet, so daß Luft durch ihn in den Innenraum des Spritzenzylinders (1) strömen kann, wenn der Kolben (2) aus dem Zylinder (1) herausgezogen wird, so daß ein Innenraum des Zylinders (1) niemals unter Unterdruck steht und die stationäre Phase nicht Turbulenz unterworfen wird, da die einströmende Luft nicht durch die Lösungsablauföffnung (1a) strömt.

2. Spritzentypsäule nach Anspruch 1, worin der Kolben (2) wenigstens einen darin ausgebildeten Luftkanal (2a, 2'a) aufweist, der ihn längs der Achse von einer oberen Oberfläche (2b) zu einer unteren Oberfläche (2c) des Kolbens durchsetzt.

3. Spritzentypsäule nach Anspruch 2, worin zwei Luftkanäle (2a, 2'a) gebildet sind, die den Kolben (2) durchsetzen.

**4.** Verfahren zur Verwendung einer Säule vom Spritzentyp zur Flüssigkeitschromatographie, wobei die Säule einen Spritzenzylinder (1) mit einer Lösungsablauföffnung (1a) an dessen Bodenende und einer Öffnung (1b) an dessen oberen Ende aufweist und weiter einen Kolben (2) aufweist, wobei das Verfahen die folgenden Stufen umfaßt:

a) Verschließen der Lösungsablauföffnung (1a) mit einem flüssigkeitsdurchlässigen Element (3);

b) Gleichmäßiges Einfüllen einer vorbestimmten Menge der stationären Phase (4), die für gewöhnliche Säulenchromatographie oder Hochdruckflüssigkeitschromatographie (HPLC) geeignet ist, in den Zylinder (1);

c) Einbringen einer vorbestimmten Menge einer Probenlösung in den Zylinder (1) von dessen offenen Ende (1b) her;

d) Einbringen einer vorbestimmten Menge eines Lösungsmittels zum Entwikkeln (5) in den Zylinder (1);

e) Einsetzen des Kolbens (2) in die Öffnung (1b) in den Zylinder (1) und

f) Eindrücken des Kolbens (2) in den Innenraum des Zylinders (1), um zu bewirken, daß das Lösungsmittel zum Entwickeln (5) durch die stationäre Phase hindurchtritt;

**dadurch gekennzeichnet, daß** der Kolben (2) mit wenigstens einem Luftkanal (2a, 2′a), der ihn längs der Achse von einer oberen Oberfläche (2b) zu einer unteren Oberfäche (2c) des Kolbens (2) durchsetzt, ausgebildet ist, und das Eindrücken des Kolbens (2) in den Innenraum des Zylinders (1) bewirkt wird, indem eine Bedienungsperson mit einem Finger auf die obere Oberfläche (2b) des Kolbens drückt, um zu bewirken, daß das Lösungsmittel zum Entwickeln durch die stationäre Phase hindurchtritt und

g) nach dem Verbrauch des Lösungsmittels der Finger von der oberen Oberfläche (2b) entfernt und der Kolben (2) aus dem Zylinder (1) herausgezogen wird, während Luft in den Zylinder (1) aus der Umgebung nicht durch die Lösungsabgabeöffnung (1a), sondern durch den wenigstens einen Luftkanal (2a, 2′a) strömt, um einen Unterdruck im Zylinder (1) zu verhindern, wodurch die stationäre Phase (4) niemals einer Turbulenz infolge der Bewegung der einströmenden Luft unterworfen ist und

h) Einbringen von weiterem Lösungsmittel zum Entwickeln in den Zylinder ohne Zerstörung des in der stationären Phase ausgebildeten Gleichgewichtszustands.

**5.** Verfahren nach Anspruch 4, worin der Kolben zwei Luttkanale (2a, 2′a) hat, die sich von der Oberfläche des oberen Endes (2b) zur Oberfläche des unteren Endes (2c) desselben erstrecken und worin das Lösungsmittel zum Entwickeln in den Zylinder durch einen Luftkanal (2′a) der zwei Luftkanäle (2a, 2′a) eingeführt wird, ohne den Kolben (2) aus dem Zylinder (1) herauszuziehen.

## Revendications

**1.** Colonne du type à seringue pour une utilisation en chromatographie destinée à la séparation d'un produit de réaction, comprenant :

- un corps cylindique (1) comportant un orifice d'évacuation d'une solution (1a) situé à l'extrémité inférieure de ce corps et une ouverture (1b) à son partie supérieure et une phase fixe (4) convenable pour une chromatographie sur colonne ordinaire ou HPLC chargée dans ledit corps de façon uniforme, ledit corps pouvant être occupé par ladite phase fixe, une solution contenant une substance en trace à purifier ou à séparer de cette solution, et, à l'intérieur, un solvant pour élution ;

- un élément perméable au liquide (3) fermant ledit orifice d'évacuation de solution au passage de la phase fixe ;

- un piston (2) qui peut être inséré de façon répétée dans ledit et retiré de façon répétée dudit corps cylindrique à travers ladite ouverture (1b) au niveau de ladite extrémité supérieure dudit corps cylindrique , caractérisé en ce que ledit piston (2) comporte au moins un passage d'air (2a, 2′a) formé à l'intérieur et percé à travers lui le long d'un axe , au moins un dit passage d'air (2a, 2′a) faisant communiquer l'intérieur dudit corps cylindrique (1) avec l'extérieur pour permettre à l'air de circuler à l'intérieur dudit corps cylindrique (1) à travers lui lorsque ledit piston (2) est extrait dudit corps (1), de sorte qu'un espace intérieur dudit corps (1) ne subisse jamais une dépression et que ladite phase fixe ne soit pas soumise à une turbulence, parce que l'air entrant ne s'écoule pas à travers ledit orifice d'évacuation de solution (1a).

**2.** Colonne du type à seringue selon la revendication 1, dans laquelle ledit piston (2) comporte au moins un passage d'air (2a, 2′a) formé pour le traverser le long de l'axe à partir d'une surface supérieure (2b) vers une surface inférieure (2c) dudit piston.

3. Colonne du type à seringue selon la revendication 2, dans laquelle deux passages d'air (2a, 2'a) sont formés de façon à traverser ledit piston (2).

4. Procédé d'utilisation d'une colonne du type à seringue pour une chromatographie à l'état liquide, ladite colonne comprenant un corps cylindrique (1) comportant un orifice d'évacuation de solution (1a) situé à son extrémité inférieure et une ouverture (1b) située à son extrémité supérieure , et comprenant de plus, un piston (2), ledit procédé comprenant les étapes suivantes :
   (a) fermer ledit orifice d'évacuation de solution (1a) avec un élément perméable au liquide (3);
   (b) charger une quantité prédéterminée de la phase fixe (4) convenable pour une chromatographie sur colonne ordinaire ou HPLC, de façon uniforme dans ledit corps (1) ;
   (c) introduire une quantité prédéterminée d'une solution d'échantillon dans ledit corps (1) à partir de son extrémité ouverte (1b) ;
   d) introduire une quantité prédéterminée d'un solvant pour une élution (5) dans ledit corps (1);
   e) insérer ledit piston (2) dans ladite ouverture (1b) dudit corps (1) et
   f) presser ledit piston (2) vers l'intérieur dudit corps (1) pour entrainer ledit solvant pour élution à passer à travers ladite phase fixe ;
   <u>caractérisé en ce que</u> ledit piston (2) formé avec au moins un passage d'air (2a, 2'a) le traversant le long de l'axe à partir d'une surface supérieure (2b) vers une surface inférieure (2c) dudit piston (2), ladite pression dudit piston (2) vers l'intérieur dudit corps (1) étant effectuée par pression d'un doigt de l'opérateur sur ladite surface supérieure (2b) dudit piston , de façon à entrainer ledit solvant pour élution à passer à travers ladite phase fixe et
   g) après consommation du solvant, relâcher ledit doigt de ladite surface supérieure (2b) et retirer ledit piston (2) dudit corps (1) tandis que l'air s'écoule dans ledit corps (1) depuis l'extérieur, non pas à travers ledit orifice d'évacuation de solution (1a), mais à travers au moins un passage d'air (2a, 2'a) pour empêcher une dépression à l'intérieur dudit corps (1), de sorte que la phase fixe (4) n'est jamais soumise à une turbulence due au mouvement de l'air entrant et
   h) introduire un autre solvant pour élution dans le corps sans rompre l'état d'équilibre formé dans la phase fixe.

5. Procédé selon la revendication 4, dans lequel ledit piston comporte deux passages d'air (2a, 2'a) s'étendant à travers lui de sa surface d'extrémité supérieure (2b) à sa surface d'extrémité inférieure (2c) et dans lequel le solvant pour élution est introduit dans le corps par l'un (2a') des deux passages d'air (2a, 2a') sans retirer ledit piston (2) hors dudit corps (1).

Fig. 2

Fig. 1

Fig. 3

Fig. 4